# EUROPÄISCHE PATENTANMELDUNG

(11) **EP 1 048 630 A2**
(43) Veröffentlichungstag der Anmeldung: **02.11.2000**
(21) Anmeldenummer: 99112327.4
(22) Anmeldetag: 26.06.1999
(51) Int. Cl.: C04B 16/08, C04B 18/20, E04C 2/20

(54) **Kunststoffe zum Einsatz im Bauwesen**

(30) Priorität: 28.04.1999 US 300868
(71) Anmelder: Vincent, Irvin G., Luxemburg, WI 54217-0480 (US); Weber, Ralf D., Green Bay, WI 54301 (US)
(72) Erfinder: Vincent, Irvin G., Luxemburg, WI 54217-0480 (US); Weber, Ralf D., Green Bay, WI 54301 (US)
(74) Vertreter: Haussingen, Peter

(57) **Zusammenfassung**

Die Aufgabe der Erfindung ist es, alle primär erzeugten Kunststoffe als auch Recyclingmaterial aus allen gemischten Kunststoffabfällen im Bauwesen als universellen Baustoff und für Bauteile, Bauelemente sowie Bauwerke einzusetzen, der ökologisch und gesundheitlich unbedenklich, der mit anderen Baustoffen und Grundmaterialien kombinierbar ist, der nicht brennbar ist, sehr gute Wärmeträger- und Dämmeigenschaften aufweist, wasserresistent sowie witterungsbeständig ist, eine leichte universelle Bearbeitbarkeit aufweist und dessen Abfälle immer wieder verwertungsfähig sind, zudem kostengünstig bei geringem finanziellen und wirtschaftlichen Aufwand hergestellt und bearbeitet werden kann, ressourcenschonend ist sowie den jeweiligen Bauvorschriften genügt.

Erfindungsgemäß wird die Aufgabe dadurch gelöst, daß Recyclingmaterial aus allen gemischten Kunststoffabfällen als auch primär erzeugte Kunststoffe (PE, PVC, PP, PS, ABS, usw.) als universeller Baustoff im Hoch- und Tiefbau, als Zuschlagstoff zu anderen Baumaterialien, als Ausgleichsmaterial, zur Wärmedämmung und Kälteisolation und zur Schalldämmung eingesetzt werden, wobei das Mischungsverhältnis der einzelnen Arten der Kunststoffabfälle im Recyclingmaterial als auch der primär erzeugten Kunststoffe sowie beider Arten untereinander in ihren unterschiedlichen Volumenanteilen und Größen dem jeweiligen Einsatzzweck angepaßt ist sowie zu einem schwer entflammbaren Baustoff verarbeitet ist.

## Beschreibung

Die Erfindung betrifft den Einsatz von Kunststoffen im Bauwesen.

Mit der Entwicklung umweltfreundlicher Baustoffe ist es erforderlich ein Material einzusetzen, das den verschiedenen gesetzlichen Anforderungen im Bausektor entspricht, das aus allen primär erzeugten Kunststoffen als auch aus Recyclingmaterial aller Kunststoffabfälle hergestellt wird und das die während der Verarbeitung entstehenden Abfälle beziehungsweise eventuell durch spätere Sanierungsarbeiten anfallenden Abrißmaterialien aus diesem Baustoff, gleichfalls ein umweltfreundliches Verhalten aufweist, wobei dieses Material immer wieder verwertbar ist.
Bis heute konnten nur Teil- oder Insellösungen für Baustoffe, die diesen Anforderungen entsprechen, zufriedenstellend realisiert werden. Die derzeit vorherrschenden Baustoffe, die zum Beispiel als Ausgleichsmaterial, Isolationsmaterial, zur Schalldämmung und zur Herstellung von Bauelementen sowie Bauwerken eingesetzt werden und als umweltfreundlich gekennzeichnet sind, sind in ihrer Herstellung und Bearbeitung kostenaufwendig und haben nur einen geringen Prozentsatz der Wiederverwertbarkeit.

Die Nachteile der heute verwendeten Baustoffe als Ausgleichsmaterialien, Dämm- und Isolationsmaterialien als auch zur Herstellung von Bauelementen sowie Bauwerken, bestehen weiterhin darin, daß diese aus mineralischen oder chemischen Rohstoffen bestehen, welche für ihren Einsatz aufwendig technologisch aufbereitet, abgebaut und unter hohem finanziellen und wirtschaftlichen Aufwand hergestellt werden müssen. Des Weiteren belasten diese Baustoffe bei einer späteren notwendigen Sanierung als Abrißmaterial die Umwelt, wobei ihre Entsorgung oder Wiederaufbereitung erneut Kosten verursacht. Weitere Nachteile liegen darin, daß diese Baustoffe nicht immer schüttfähig sind, oftmals den geforderten Brandlasten nicht entsprechen, nicht immer wasserresistent sowie witterungsbeständig, oft mit gesundheitsschädlichen Bindemitteln versehen sind und vor ihrem Einsatz auf die erforderlichen geometrischen Abmessungen gebracht werden müssen.

Nach dem Stand der Technik werden auch Baustoffe aus Kunststoff für den jeweiligen Einsatzzweck aus Grundstoffen neu hergestellt. Zum Beispiel ist aus der Druckschrift DE 4202431 C2 ein Verfahren und Verwendung einer Vorrichtung zur Herstellung eines Leichtzuschlagstoffes mit gehärteter Oberfläche für Putze, Betone, mineralisch oder kunststoffgebundene Dämmplatten sowie Dämmstoffmaterial für Schüttungen bekannt, bei dem expandiertes Polystyrol zerkleinert, fraktioniert und thermisch behandelt wird. Dieses Verfahren ist aufwendig und teuer, das erhaltene Material ist brennbar und nicht universell einsetzbar, zur Herstellung sind keine Kunststoffabfälle verwendbar.
Des Weiteren wird in der Druckschrift CH 622049 ein granulares Isoliermaterial für den Einsatz im Gebäudebau für Aufschüttungen als Sickerpackungen beschrieben, das aus einem Kern höheren spezifischen Gewichts als der Mantel besteht. Die Herstellung dieses Granulats ist technologisch aufwendig und kostenintensiv. Es läßt sich nicht universell im Hoch- und Tiefbau einsetzen und ist aus Kunststoffabfälle nicht herstellbar sowie schwer zu recyceln.
In der Druckschrift DE-G 9400024.7 werden Baustoffe, nämlich Beton, Mörtel, Estrich und Füller beschrieben, bei dem ein Granulat aus Kunststoff als Zuschlagstoff eingesetzt wird. Das Granulat kann auch aus Kunststoffabfällen hergestellt werden, indem es zunächst gemahlen und dann erneut extrudiert wird. Dieses Verfahren ist sehr energie- und kostenaufwendig, das Granulat kann nur in Beton oder Mörteln zum Ersatz kommen, die Herstellung von Bauteilen oder Bauwerken daraus ist nicht möglich.

Die Aufgabe der Erfindung ist es, alle primär erzeugten Kunststoffe als auch Recyclingmaterial aus allen gemischten Kunststoffabfällen im Bauwesen als universellen Baustoff und für Bauteile, Bauelemente sowie Bauwerke einzusetzen, der ökologisch und gesundheitlich unbedenklich, der mit anderen Baustoffen und Grundmaterialien kombinierbar ist, der nicht brennbar ist, sehr gute Wärmeträger- und Dämmeigenschaften aufweist, wasserresistent sowie witterungsbeständig ist, eine leichte universelle Bearbeitbarkeit aufweist und dessen Abfälle immer wieder verwertungsfähig sind, zudem kostengünstig bei geringem finanziellen und wirtschaftlichen Aufwand hergestellt und bearbeitet werden kann, ressourcenschonend ist sowie den jeweiligen Bauvorschriften genügt.

Die Aufgabe wird durch die in den Patentansprüchen 1 bis 5 aufgeführten Merkmale gelöst. Bevorzugte Weiterbildungen ergeben sich aus den Unteransprüchen.

Das Wesen der Erfindung besteht darin, daß primär erzeugte Kunststoffe als auch Recyclingmaterial aus allen gemischten Kunststoffabfällen, aus zum Beispiel aus PE, PVC, PP, PS, ABS, in üblicher Weise aufbereitet und vorzugsweise geschreddert sowie in geeigneter Größe gemischt sind, als universeller Baustoff im Bauwesen sowie zur Herstellung von Bauelementen und Bauwerken eingesetzt wird.

Die primär erzeugten Kunststoffe als auch das aus Kunststoffabfällen hergestellte Recyclingmaterial sind in ihren unterschiedlichen Volumenanteilen und Größen so zusammengesetzt, wie es für den jeweiligen Einsatzzweck notwendig ist, wobei davon auch das Mischungsverhältnis der einzelnen Kunststoffarten als auch des Recyclingmaterials aus Kunststoffabfällen abhängig ist.

Die aus primär erzeugten Kunststoffen als auch aus Recyclingmaterial aus Kunststoffabfällen hergestellten Baustoffe sind mit anderen Baumaterialien als Zuschlagstoff universell misch- und kombinierbar, so daß sie zusammen für einen Einsatzzweck verwendet werden können.

Die primär erzeugten Kunststoffe als auch das Recyclingmaterial aus Kunststoffabfällen werden in einer Ausführungsform, insbesondere zur Verwendung im Hochbau durch einen Behandlungsprozeß in üblicher Weise zu einem schwer entflammbaren Baumaterial und somit zu einem schwer entflammbaren Baustoff verarbeitet.

Primär erzeugter Kunststoff kann zur Erzielung besonderer physikalischer Eigenschaften als Baustoff mit dem Recyclingmaterial aus Kunststoffabfällen gemischt werden, welches gleichfalls für Recyclingmaterial aus gemischten Kunststoffabfällen zur Erzielung besonderer physikalischer Eigenschaften mit primär erzeugten Kunststoffen zutrifft.

Der Einsatz kann als universelles Ausgleichsmaterial für den gesamten Bausektor im Innen- und Außenbereich, in welchem Ausgleichsmaterialien benötigt werden, erfolgen. Die primär erzeugten Kunststoffe als auch das Recyclingmaterial aus Kunststoffabfällen können in gleichen oder unterschiedlichen Größen vorliegen. Das Ausgleichsmaterial ist außerdem wasserabweisend, witterungsbeständig, nicht brennbar sowie in unterschiedlichen Druckfestigkeiten herstellbar.

Eine andere Anwendung besteht im Einsatz als universelles Dämmaterial im gesamten Bausektor im Innen- und Außenbereich zur Wärmedämmung und Kälteisolation.

Eine Verwendung als universelles Schalldämmungsmaterial für den gesamten Bausektor im Innen- und Außenbereich, in welchem Schalldämmungsmaterialien benötigt werden ist ebenfalls gegeben.

Des Weiteren sind die primär erzeugten Kunststoffe als auch das Recyclingmaterial aus Kunststoffabfällen zur Herstellung von Bauelementen und Bauteilen, auch mit statischer Beanspruchung einsetzbar, zur Armierung können Fasern oder andere Bewehrungen genutzt werden, zusätzlich können diese eine dekorative Oberfläche aufweisen.

Mit geeigneten Verfahren sind Bauwerksteile und ganze Bauwerke aus primär erzeugten Kunststoffen als auch Recyclingmaterial aus Kunststoffabfälle herstellbar.

Eine weitere Möglichkeit des Einsatzes von primär erzeugten Kunststoffen als auch Kunststoffabfällen besteht als Guß- oder Vergußmasse, die in ihrer Zusammensetzung konfektioniert dem Einsatzzweck angepaßt ist.

Die besonderen Vorteile der Erfindung bestehen insbesondere darin, daß die Ausgangsstoffe zur Herstellung von Ausgleichsmaterial, Isolations- und Schallschutzmaterial aus primär erzeugten Kunststoffen als auch aus Recyclingmaterial aus Kunststoffabfällen bestehen, welche in großen Mengen ständig anfallen und somit einer wirtschaftlichen Verwertung zugeführt werden. Insbesondere auch durch die Verwendung von Kunststoffabfällen wird Deponieraum eingespart und geologisch gewachsene und in der Natur vorkommende mineralische Grundstoffe, die für Baustoffe dieser Zwecke in Größenordnung abgebaut werden, bleiben vorteilhaft für die Umwelt erhalten.

Weiterhin werden die Eigenschaften des Baustoffs, der aus primär erzeugten Kunststoffen als auch aus Recyclingmaterial aus Kunststoffabfällen hergestellt wurde gegenüber herkömmlichen Baustoffen in der Weise verbessert, daß sie ökologisch verträglich und gesundheitlich unbedenklich sind. Der Baustoff zeichnet sich durch Schwerentflammbarkeit, gute Wärmeträger- und Dämmeigenschaften, hohe Druckfestigkeit, variabel in seiner Dichte gegenüber mineralischen Baustoffen, Wasserresistenz und Witterungsbeständigkeit sowie durch eine leichte und universelle Bearbeitbarkeit aus. Das Einsatzgebiet des Baustoffes ist dadurch sehr breit, wobei er sich günstig verarbeiten läßt und mit anderen Baustoffen sowie in den verschiedenen Fraktionen untereinander kombinierbar ist. Durch Beimischungen von Fasern als auch dem Einsatz von Bewehrungen sind statischen Anforderungen genügende Bauteile herstellbar. Dekorative Oberflächen sind mittels geeigneter Formgebungsmittel erzielbar, ebenso mittels Beschichtung der gefertigten Bauteile oder Bauelemente. Der technische und technologische Aufwand zur Herstellung des Baustoffs aus Recyclingmaterial aus Kunststoffabfällen ist gering und die Verarbeitung zum Endprodukt wird mittels bekannter technischer Einrichtungen sowie technologischer Verfahren in üblicher Weise vorgenommen.
Die jährlich anfallenden Kunststoffabfälle werden zum größten Teil in Deponien entsorgt oder thermisch verwertet, wodurch ein umgewandelter, natürlich gewachsener, wertvoller Rohstoff nach seiner einmaligen Nutzung durch Entsorgung als Rohstoff verloren geht. Durch die Wiederverwendung wird der Kunststoffabfall wieder Rohstoff, welcher auf Grund seiner spezifischen verschiedenen Eigenschaften nach dem Stand der heutigen und zukünftigen Technik immer wieder verwertet werden kann, wobei nur geringe Abfälle nach dem heutigem Stand der Technik anfallen und die natürlichen Ressourcen geschont werden. Der positive ökonomische und ökologische Effekt, der durch eine Verwertung von Kunststoffabfällen hervorgerufen wird, ist anhand der Menge der heute schon verwerteten Kunststoffe abzuschätzen.

Die Erfindung wird als Ausführungsbeispiel an Hand von:
Fig. 1 als Schnitt durch eine Straße mit Einsatz des Recyclingmaterials aus Kunststoffabfällen zur Isolation und Schalldämmung im Straßenbau unter Betonstraßen oder anderen Straßendecken;
Fig. 2 als Schnitt durch eine Geschoßdecke mit Einsatz des Recyclingmaterials aus Kunststoffabfällen zur Isolation, Schalldämmung und als Ausgleichsmaterial im Deckenbau, unter Beton oder anderen Abdeckungen;
Fig. 3 als Schnitt durch eine Holzdecke mit Einsatz des Recyclingmaterials aus Kunststoffabfällen zur Schall- und Wärmedämmung für Fußböden bei Holzkonstruktionen(Häuser, Gebäude);
Fig. 4 als Schnitt durch eine Außenwand mit Einsatz des Recyclingmaterials aus Kunststoffabfällen zur Wärme- und Schalldämmung für Wände(Häuser, Gebäude) bei Holzkonstruktionen;
Fig. 5 als Schnitt durch eine Verbundplatte aus primär erzeugtem Kunststoff als auch Recyclingmaterial aus Kunststoffabfällen für den Einsatz als obere Beplankung einer Geschoßdecke eines Gebäudes;
Fig. 6 als Schnitt durch ein brückenartiges Bauteil aus primär erzeugtem Kunststoff als auch Recyclingmaterial aus Kunststoffabfällen näher erläutert.

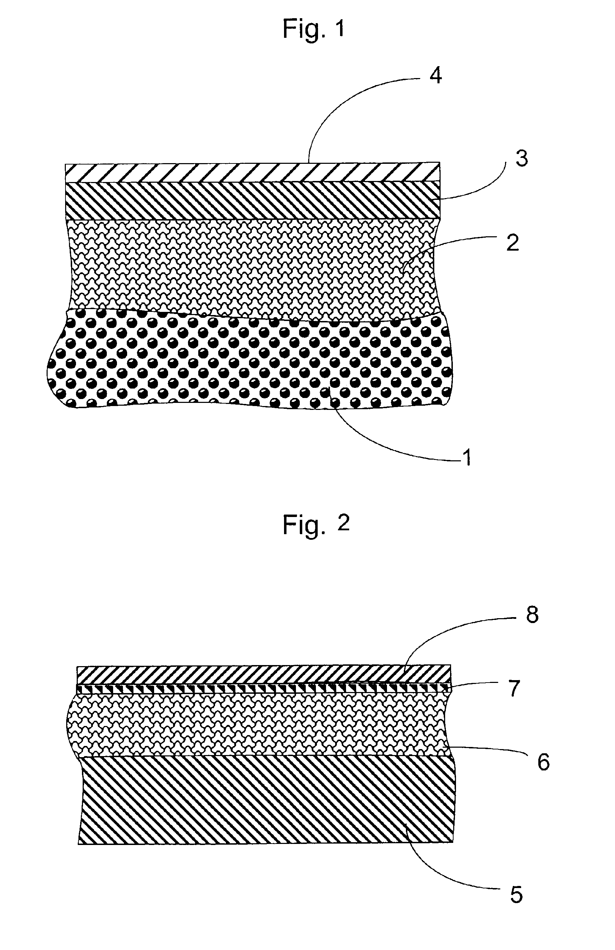

Nach Fig. 1 besteht der Aufbau einer Straße aus einem Unterbau 1 aus beispielsweise Schotter, einer Dämmschicht 2 aus primär erzeugtem Kunststoff als auch Recyclingkunststoff als Sperr- und Schalldämmschicht, einer Tragschicht 3 insbesondere aus Beton oder Asphalt und einer Deckschicht 4 aus Asphalt oder anderen im Straßenbau üblichen Materialien. Die Dämmschicht 2 wird aus dem schüttfähigen Recyclingmaterial aus Abfallkunststoff in bekannter Weise aufgebracht und verdichtet. Die Tragschicht 3 kann danach mit herkömmlichen Technologien aus allen üblichen Materialien aufgebracht werden. Es kommt zu keiner weiteren Verdichtung der Dämmschicht 2, so daß deren Elastizität erhalten bleibt, die Schalldämmung sich im Verlaufe der Zeit nicht verschlechtert sowie sich die Isolations- und Drainageeigenschaften ebenfalls nicht ändern.

Wie aus Fig. 2 als Schnitt durch eine Geschoßdecke ersichtlich ist, wird auf einer massiven Rohdecke 5 eine Ausgleichsschicht 6 aus Kunststoff oder auch Recyclingmaterial aus Kunststoffabfällen aufgebracht, die auch als Schall- und Wärmedämmschicht dient. Der weitere Fußbodenaufbau erfolgt in üblicher Weise mit einer Abdeckschicht 7 und einer Abschlußschicht 8 aus beispielsweise Estrich. Die Ausgleichsschicht 6 aus schwer entflammbarem primär erzeugtem Kunststoff als auch Recyclingmaterial aus Kunststoffabfällen wird einfach durch Schütten aufgebracht, nivelliert sowie anschließend mit der Abdeckschicht 7 versehen. Aufgrund der Eigenschaften des Kunststoffs bleiben die Schall- und Wärmedämmeigenschaften der Ausgleichsschicht 6 konstant, wobei sie gegenüber mineralischen Baustoffen für diesen Einsatz eine geringere spezifische Dichte besitzt, dadurch eine geringere Eigenmasse aufweist.

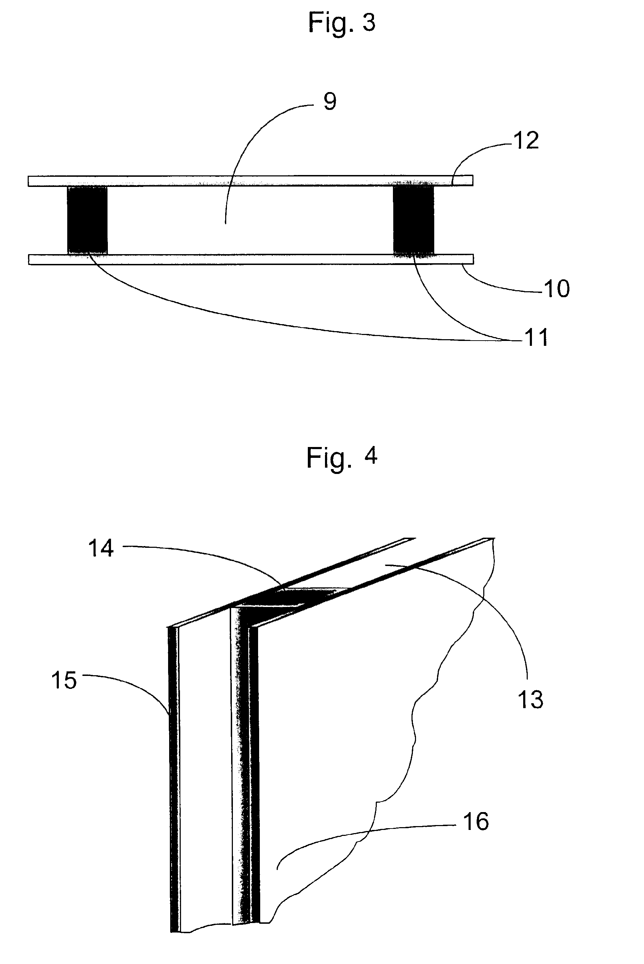

Nach Fig. 3 wird schwer entflammbar ausgerüsteter primär erzeugter Kunststoff als auch Recyclingmaterial aus Kunststoffabfällen zur Schall- und Wärmedämmung in einer Holzdecke eingesetzt, wobei dieser in Hohlräume 9, die aus einer unteren Beplankung 10, Deckenbalken 11 sowie einer oberen Beplankung 12 gebildet werden, eingebracht ist. Die günstigen Eigenschaften zur Schall- und Wärmedämmung bleiben aufgrund der spezifischen Materialeigenschaften über die gesamte Einsatzdauer erhalten. Als vorteilhaft erweist sich zudem die Vermeidung von Ungezieferbefall in diesem Baustoff.

Aus Fig. 4 ist der Einsatz von primär erzeugten Kunststoffen als auch Recyclingmaterials aus Kunststoffabfällen zur Wärme- und Schalldämmung für Wände aus Holzkonstruktionen ersichtlich. In Zwischenräume 13 , die aus einer auf Wandständer 14 befestigten äußeren Wandbeplankung 15 und einer inneren Wandbeplankung 16 gebildet werden, ist schwer entflammbarer primär erzeugter Kunststoff als auch Recyclingmaterial aus Kunststoffabfällen zur Schall- und Wärmedämmung eingebracht.

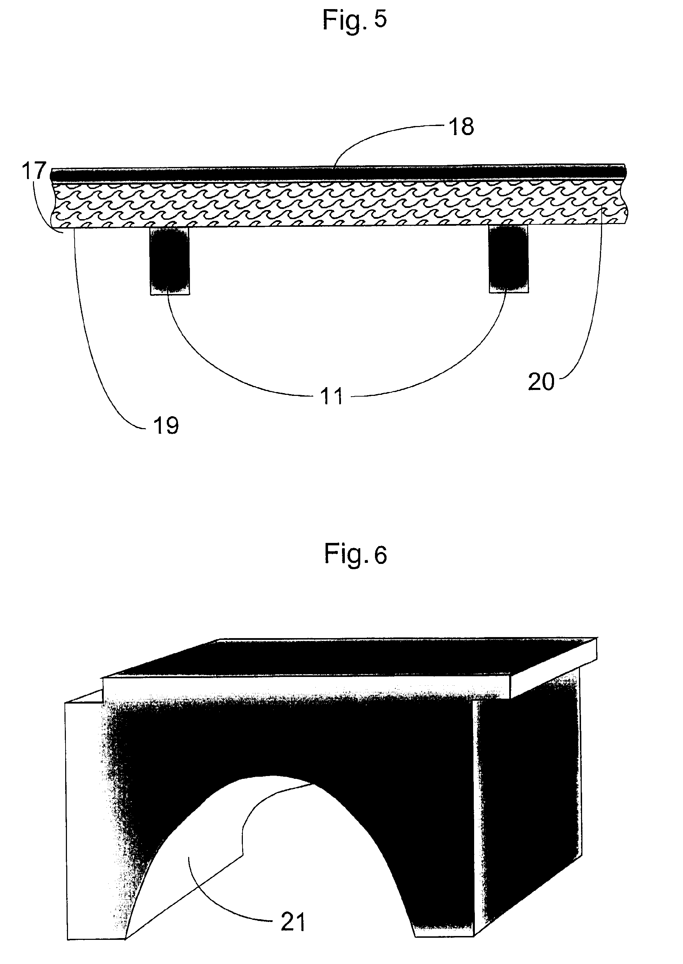

Nach Fig.5 wird als tragendes, den Fußboden einer Etage bildendes Bauelement eine Verbundplatte 17, die aus einer Basisplatte 18 und einer mit dieser kraft- und formschlüssig verbundenen Bewehrungsschicht 19 mit Armierung 20 aus beispielsweise Fasern besteht auf die Deckenbalken 11 aufgelegt. Die kompakte Basisplatte 18 besteht beispielsweise aus Kunststoff oder auch aus Recyclingmaterial aus Kunststoffabfällen, der in bekannter Weise zu dieser Platte verarbeitet wurde. Als Basisplatte 18 können jedoch auch Platten aus jedem beliebigem anderen Material verwendet werden. Die Bewehrungsschicht 19 besteht aus Kunststoff als auch Recyclingmaterial aus Kunststoffabfällen oder auch einem Gemisch aus Kunststoff und Recyclingmaterial aus Kunststoffabfällen in dem Fasern als Armierung 20 eingelagert sind und die beispielsweise durch Pressen hergestellt sowie gleichzeitig mit der Basisplatte 18 kraft- und formschlüssig verbunden wurde.

Aus Fig. 6 ist die Verwendung von primär erzeugtem Kunststoff als auch Recyclingmaterial aus Kunststoffabfällen zur Herstellung eines brückenartigen Bauelements 21 ersichtlich. Die Herstellung derartiger Bauelemente erfolgt mittels üblicher Technologien zur Bildung von kompakten Konglomeraten aus den Partikeln des primär erzeugten Kunststoffs als auch des Recyclingmaterials aus Kunststoffabfällen, so daß die erforderliche Tragfähigkeit in Abhängigkeit der Größe des Bauteils erzielt wird. Zusätzlich können diese brückenartigen Bauelemente 21 Armierungen aufweisen. Es ist auch vorstellbar, daß beispielsweise Steine oder auch Straßenoberflächen aus primär erzeugten Kunststoffen als auch Recyclingmaterial aus Kunststoffabfällen bestehen.

### Verwendete Bezugszeichen

- 1: Unterbau
- 2: Dämmschicht
- 3: Tragschicht
- 4: Deckschicht
- 5: Rohdecke
- 6: Ausgleichschicht
- 7: Abdeckschicht
- 8: Abschlußschicht
- 9: Hohlräume
- 10: untere Beplankung
- 11: Deckenbalken
- 12: obere Beplankung
- 13: Zwischenräume
- 14: Wandständer
- 15: äußere Wandbeplankung
- 16: innere Wandbeplankung
- 17: Verbundplatte
- 18: Basisplatte
- 19: Bewehrungsschicht
- 20: Armierung
- 21: brückenartiges Bauelement

### Verwendete Abkürzungen

- PE =: Polyethylen
- PVC =: Polyvinylchlorid
- PP =: Polypropylen
- PS =: Polystyrol
- ABS =: Acryl Butadien Styrol

## Patentansprüche

1. Kunststoffe für den Einsatz im Bauwesen,
dadurch gekennzeichnet,
daß Recyclingmaterial aus allen gemischten Kunststoffabfällen als auch primär erzeugte Kunststoffe (PE, PVC, PP, PS, ABS, usw.) als universeller Baustoff im Hoch- und Tiefbau eingesetzt sind.

2. Kunststoffe für den Einsatz im Bauwesen,
dadurch gekennzeichnet,
daß Recyclingmaterial aus allen gemischten Kunststoffabfällen als auch primär erzeugte Kunststoffe (PE, PVC, PP, PS, ABS, usw.) als Zuschlagstoff zu anderen Baumaterialien zur gemeinsamen Verwendung kombiniert und gemischt sind.

3. Kunststoffe für den Einsatz im Bauwesen,
dadurch gekennzeichnet,
daß Recyclingmaterial aus allen gemischten Kunststoffabfällen als auch primär erzeugte Kunststoffe (PE, PVC, PP, PS, ABS, usw.) als universelles Ausgleichsmaterial für den gesamten Bausektor im Innen- und Außenbereich eingesetzt sind.

4. Kunststoffe für den Einsatz im Bauwesen,
dadurch gekennzeichnet,
daß Recyclingmaterial aus allen gemischten Kunststoffabfällen als auch primär erzeugte Kunststoffe (PE, PVC, PP, PS, ABS, usw.) zur Wärmedämmung und Kälteisolation im Innen- und Außenbereich eingesetzt sind.

5. Kunststoffe für den Einsatz im Bauwesen,
dadurch gekennzeichnet,
daß Recyclingmaterial aus allen gemischten Kunststoffabfällen als auch primär erzeugte Kunststoffe (PE, PVC, PP, PS, ABS, usw.) zur Schalldämmung eingesetzt sind.

6. Kunststoffe zum Einsatz im Bauwesen nach einem der Ansprüche 1 bis 5, dadurch gekennzeichnet,
daß das Mischungsverhältnis der Kunststoffabfälle im Recyclingmaterial als auch der einzelnen primär erzeugten Kunststoffe in ihren unterschiedlichen Volumenanteilen und Größen dem jeweiligen Einsatzzweck angepaßt ist.

7. Kunststoffe zum Einsatz im Bauwesen nach einem der Ansprüche 1 bis 5 und Anspruch 6, dadurch gekennzeichnet, daß Recyclingmaterial aus Kunststoffabfällen als auch primär erzeugte Kunststoffe zu einem schwer entflammbaren Baustoff verarbeitet sind.

8. Kunststoffe zum Einsatz im Bauwesen nach einem der Ansprüche 1 bis 5 sowie den Ansprüchen 6 und 7,
dadurch gekennzeichnet,
daß Recyclingmaterial aus Kunststoffabfällen und primär erzeugte Kunststoffe miteinander gemischt sind.

9. Kunststoffe zum Einsatz im Bauwesen nach einem der Ansprüche 1 bis 5 sowie den Ansprüchen 6 bis 8,
dadurch gekennzeichnet,
daß in aus Recyclingmaterial aus Kunststoffabfällen als auch aus primär erzeugten Kunststoffen gefertigten Bauelementen und Bauteilen zur Armierung Fasern oder auch andere Bewehrungen eingesetzt sind.

10. Kunststoffe zum Einsatz im Bauwesen nach einem der Ansprüche 1 bis 5 sowie den Ansprüchen 6 bis 9,
dadurch gekennzeichnet,
daß die aus Recyclingmaterial aus Kunststoffabfällen als auch primär erzeugte Kunststoffen gefertigten Bauelemente und Bauteile eine dekorative Oberfläche aufweisen.

11. Kunststoffe zum Einsatz im Bauwesen nach einem der Ansprüche 1 bis 5 sowie den Ansprüchen 6 bis 10,
dadurch gekennzeichnet,
daß Bauelemente, Bauwerksteile und ganze Bauwerke daraus hergestellt sind.

12. Kunststoffe zum Einsatz im Bauwesen nach einem der Ansprüche 1 bis 5 sowie den Ansprüchen 6 bis 11,
dadurch gekennzeichnet,
daß diese als Guß- und Vergußmasse aufbereitet und eingesetzt sind.
